# FASCICULE DE BREVET EUROPEEN

(11) **EP 3 077 570 B1**
(45) Date de publication et mention de la délivrance du brevet: **11.10.2017**
(21) Numéro de dépôt: 14827467.3
(22) Date de dépôt: 01.12.2014
(51) Int. Cl.: C23C 18/00, F01D 5/00, F01D 5/28, C23C 26/00, C23C 28/00

(54) **PROCÉDÉ DE RÉPARATION LOCALE DE BARRIÈRES THERMIQUES**
VERFAHREN ZUR LOKALEN REPARATUR VON WÄRMESPERREN
METHOD FOR LOCALLY REPAIRING THERMAL BARRIERS

(30) Priorité: 02.12.2013 FR 1361944
(43) Date de publication de la demande: 12.10.2016
(73) Titulaire: Office National d'Etudes et de Recherches Aérospatiales (ONERA), 91120 Palaiseau (FR)
(72) Inventeur: BACOS, Marie-Pierre, F-92160 Antony (FR); LAVIGNE, Odile, F-75013 Paris (FR); RIO, Catherine, F-91470 Limours (FR); VIDAL-SETIF, Marie-Hélène, F-92350 Le Plessis Robinson (FR); ROUSSEAU, Frédéric, F-51260 Esclavolles Lurey (FR); MORVAN, Daniel, F-75005 Paris (FR)
(74) Mandataire: de Kernier, Gabriel
(86) Numéro de dépôt international: PCT/FR2014/053101
(87) Numéro de publication internationale: WO 2015/082818

(56) Documents cités:
- FR-A1- 2 729 400
- US-A- 5 399 388
- US-A- 5 723 078
- ROUSSEAU F ET AL: "Deposition of thick and 50% porous YpSZ layer by spraying nitrate solution in a low pressure plasma reactor", SURFACE AND COATINGS TECHNOLOGY, vol. 206, no. 7, 29 juin 2011 (2011-06-29) , pages 1621-1627, XP028126180, ISSN: 0257-8972, DOI: 10.1016/J.SURFCOAT.2011.06.024 [extrait le 2011-06-29] cité dans la demande

## Description

L'invention concerne un procédé pour la réparation locale de composants comportant un substrat revêtu d'une barrière thermique tels que les aubes de distributeurs, les aubes mobiles des turbines haute pression de turbomachines, notamment d'aviation, et les chambres de combustion.

L'amélioration du rendement des turbomachines, notamment dans le domaine aéronautique, a conduit à une augmentation de la température des gaz sortant de la chambre de combustion vers la turbine. Une adaptation des composants à cette élévation de température a été menée grâce au développement de nouveaux alliages pour les substrats, en particulier les superalliages monocristallins à base de nickel, à la mise en oeuvre de systèmes de refroidissement par injection de gaz traversant le composant, et au dépôt de céramiques comme isolant thermique appelé barrière thermique. Cette barrière thermique crée pour un composant refroidi en régime permanent un gradient de température pouvant aller jusqu'à 200°C pour une épaisseur de barrière thermique de 150µm d'épaisseur environ. Les qualités recherchées d'une barrière thermique sont une faible conductivité thermique, une forte adhérence au substrat lorsque le composant est en service, et une permanence de cette adhérence, notamment lors des cycles thermiques sévères subis par le composant.

Pour satisfaire ces exigences, une sous-couche de barrière thermique et un oxyde protecteur sont en général disposés entre le substrat en superalliage et la barrière thermique. La sous-couche peut être en alliage de composition MCrAlY, en particulier avec M étant égal au fer, au cobalt et/ou au nickel, ou en aluminiure de nickel simple ou modifié par un métal de la mine du platine ou dopé par un élément réactif, par exemple zirconium, hafnium ou yttrium, ou bien d'un dépôt de platine diffusé. La sous-couche de barrière thermique permet d'adapter les différences de coefficient de dilatation entre le superalliage et la barrière thermique. La sous-couche permet également de protéger le superalliage contre l'oxydation, la barrière thermique étant poreuse. La sous-couche crée par interaction avec l'oxygène un oxyde protecteur de croissance, typiquement de l'alumine, appelé TGO pour "Thermally Growth Oxide" en langue anglaise. La couche d'oxyde TGO commence à croître lors du procédé de dépôt de la barrière thermique et sert d'adhésif pour la fixation de la barrière thermique sur le superalliage.

Les barrières thermiques peuvent être déposées sur le substrat à revêtir soit par une technique de projection, par exemple la projection thermique APS pour "Air Plasma Spray" ou LPPS "Low Pressure Plasma Spray" ou HVOF pour "High Velocity Oxy Fuel", soit par dépôt par voie physique en phase vapeur c'est-à-dire par évaporation, par exemple par EB-PVD pour "Electron Beam - Physical Vapour Deposition".

Des techniques alternatives ont également été publiées comme les procédés SCP pour "Spray Conversion Processing" ou SPPS pour "Solution Precursor Plasma Spray" décrits dans US 6025034, US2003/0077398, Padture et alia « Towards durable thermal barrier coatings with novel microstructures deposited by solution-precusor plasma spray » Acta Materialia (2001) 2251-2257 et M. Gell et al « Highly durable thermal barrier coatings made by the solution precursor plasma spray process » Surface and Coating technology 177-178 (2004) 97-102 et qui consistent à injecter dans la flamme d'une torche à plasma haute puissance (35-45 kW) les particules sous formes de sels à l'état liquide afin de les transformer en oxyde solide puis de les fondre dans la torche plasma et de les projeter sous forme oxyde fondu. D'autres techniques d'élaboration de céramiques oxydes épaisses ou de barrières thermiques existent telles que le dépôt chimique en phase vapeur connu sous l'acronyme CVD ou assisté par plasma connu sous l'acronyme PE-CVD pour "Plasma Enhanced Chemical Vapour Deposition", cf. FR 2 695 944, la voie sol-gel publiée dans US 5585136 ou le procédé par réacteur plasma à basse pression de l'article Rousseau et alia "Deposition of thick and 50% porous YpSZ layer by spraying nitrate solution in a low pressure plasma reactor", Surface and Coating Technology 206 (7) (2011) 1621-1627.

Un dépôt obtenu par projection thermique présente en général une structure lamellaire qui peut être altérée par la présence d'infondus. Les techniques SPPS et SCP permettent d'obtenir une structure lamellaire moins marquée avec une microporosité et une nanoporosité du dépôt. La morphologie des barrières thermiques obtenues par projection thermique favorise une multi fissuration et un écaillage au sein de la céramique suivant une fissure parallèle à l'interface sous-couche/céramique.

Un dépôt obtenu par EB-PVD présente une structure de type colonnaire qui permet une meilleure adaptation des contraintes mécaniques et thermiques et est généralement préféré pour les applications à hautes températures telles que les aubes des turbines où l'endommagement se concentre au niveau de la couche d'alumine à l'interface sous-couche/céramique.

La Demanderesse s'est intéressée particulièrement aux barrières thermiques déposées à base de zircone, notamment de zircone yttriée, d'oxyde de cérium, de magnésie. En fonctionnement, les barrières thermiques peuvent être endommagées sous l'action de contaminants, notamment le sable, les poussières, les sédiments, les cendres volcaniques, présents dans l'environnement du moteur et qui sous l'action de la température et de l'atmosphère oxydante se décomposent et forment à la surface de la barrière thermique, des composés liquides ou semi-liquides. Ces composés constitués typiquement d'oxydes de calcium, magnésium, aluminium et silicium, sont désignés par le terme générique CMAS. Ces composés non souhaitables peuvent également contenir d'autres oxydes tels des oxydes métalliques, par exemple de fer, de titane ou encore de nickel, ou des oxydes alcalins, par exemple Na₂O ou K₂O. Du fait de leur faible viscosité, les CMAS fondus s'infiltrent lors du fonctionnement du moteur dans la porosité de la barrière thermique (pores proprement dits, fissures, espaces inter-colonnaires) et se solidifient au refroidissement entraînant l'apparition de fissures de délaminage dans la barrière thermique infiltrée qui peuvent mener à terme à son écaillage. De plus, il peut y avoir dissolution de la barrière thermique dans le CMAS fondu ce qui conduit à une dégradation et une modification de morphologie et de structure de la barrière thermique en contact avec le CMAS. US 2007/0160859 décrit la composition de couches anti-CMAS à base de zircone dopée avec différents oxydes de terres rares ou à base de composés de type X₂Zr₂O₇, X étant une terre rare. Généralement la couche anti-CMAS considérée comme la plus efficace est celle décrite par S. Krämer, J. Yang and C. Levi, dans J. Am. Ceram. Soc. 91 [2] 576-583, (2008) et est à base de zirconate de gadolinium Gd₂Zr₂O₇.

Bien que des progrès aient été réalisés afin de limiter la fissuration et l'écaillage de ces barrières thermiques, la Demanderesse a identifié un besoin primordial de pouvoir les réparer des endommagements locaux. En effet l'écaillage peut se produire soit juste après dépôt de la barrière thermique sur le composant suite à un choc mécanique ou thermique, soit plus tard en service. Dans ce dernier cas, généralement l'écaillage se situe dans les zones les plus contraintes thermiquement et mécaniquement comme par exemple le haut des pales qui peut subir une touche avec le carter, ou le bord d'attaque siège d'impacts de particules ou de débris. Dans le cas d'impacts ou de délaminage superficiel de la barrière thermique et/ou de la couche anti-CMAS, la réparation s'adressera à ces deux couches uniquement avec reconstruction de la barrière thermique et/ou de sa couche anti-CMAS, selon le cas. Dans le cas d'un écaillage d'une portion de la barrière thermique suite à des sollicitations thermiques et/ou mécaniques, la réparation locale aura lieu sur une sous-couche remise à nu, éventuellement oxydée, avec présence de fissures à l'interface sous-couche/ barrière thermique que l'on cherche à reboucher pour faire à nouveau adhérer la barrière thermique et sa couche anti-CMAS.

Pour réparer les barrières thermiques, l'état de l'art courant préconise d'enlever complètement la barrière thermique et sa sous-couche. Une telle opération débute par des techniques abrasives de type sablage ou jet d'eau ou par des techniques de dissolution dans des solutions alcalines à haute température et pression ou par traitement thermochimique par un gaz fluoré. Elle est ensuite suivie d'une désoxysulfuration et d'une désaluminisation. Enfin, sur le substrat remis à nu, l'ensemble sous-couche et barrière thermique est déposé à nouveau. La présence d'endommagements très locaux conduit à un reconditionnement total du composant avec la mise en oeuvre de techniques agressives qui présentent des risques d'endommagement du composant, une réduction des sections de matière et des cotes ce qui est désavantageux dans les zones à parois fines et à rayon de courbure imposé et enfin la mise en oeuvre de moyens spécifiques et lourds tels que l'autoclave, de gaz fluorés, etc. De plus il est souvent difficile d'ôter toute la barrière thermique surtout lors d'un dépôt par EB-PVD à microstructure colonnaire optimisée pour une forte adhérence.

A cet effet, FR 2827311 et US 7008522 décrivent une méthode de réparation de barrières thermiques. Après les techniques usuelles de préparation de la zone à réparer par sablage, polissage..., et de reconstitution de sous-couche par dépôt de métaux par courant électrique, et formation de la couche d'oxyde de croissance, la barrière est reconstituée par EB-PVD. Il est alors nécessaire de soumettre le composant à des mouvements d'oscillation, au cours du dépôt EB-PVD, afin d'uniformiser la réparation. Il s'agit donc d'une technique complexe requérant à la fois une installation EB-PVD et un outillage motorisé spécifique.

US 5723078 décrit une technique de réparation locale d'une barrière thermique par nettoyage local de la sous-couche de la céramique écaillée et redépôt d'une couche de céramique par projection plasma. Ce dépôt peut se faire après traitement de la couche de liaison par sablage, micro usinage, photolithographie ou rainurage laser afin d'augmenter sa rugosité tel que décrit dans EP 0808913, US 7094450, US 2004/0219290 et US 2005/0191516. Il peut aussi être réalisé après avoir enlevé la couche écaillée de céramique par jet d'eau puis après avoir créé un profil adapté au dépôt de poudres qui sont projetées par projection atmosphérique plasma ou dans une installation HVOF (High Velocity Oxy-Fuel ou Projection par Flamme Supersonique), voir EP 1832668, US 2007/0202269, ou par d'autres variantes de projection telles que la pulvérisation plasma, la pulvérisation à la flamme, et la projection par arc fil et par plasma d'arc soufflé. La poudre céramique peut être introduite dans un chalumeau de type oxyacétylénique afin de la projeter semi fondue sur la partie à réparer, cf. US 2005/0129868. La poudre céramique projetée peut être composée d'un mélange de poudres ayant un point de fusion suffisamment bas pour que la phase soit fondue au moment de la projection, voir US 2005/0003097. Le dépôt céramique projeté peut également présenter un gradient de composition variable ou défini entre la sous-couche et la barrière thermique tel que décrit par US 2011/287191 et WO 2011/144860.

Enfin, US 7115832 décrit un dispositif dit portatif de réparation de barrières thermiques basé sur la technologie des plasmas d'arc à l'atmosphère. Ce procédé également appelé micro plasma, consiste en un pistolet équipé d'une torche plasma formé entre deux électrodes et d'un injecteur de poudre sous argon comme gaz plasmagène. Le pistolet plasma doit être refroidi à l'eau et protégé par un gaz, par exemple de l'argon à 2-8 litres par minute. Il ne permet d'élaborer que des bandes réparatrices de faible largeur comprise entre 0,5 et 5 mm.

En raison des mauvaises propriétés mécaniques des couches lamellaires obtenues par projection plasma, l'ensemble de ces techniques n'est pas applicable pour les zones fortement sollicitées thermiquement et mécaniquement telles que les bords d'attaque, siège préférentiel des écaillages par érosion, ou l'intrados. De plus, les installations de projection connues ont des inconvénients majeurs liés à leur forte consommation d'énergie, de gaz et de poudres avec un rendement faible et d'importants inconvénients environnementaux et d'exposition des travailleurs aux poudres fines.

US 7476703, US 6875464, US 2004/214938, US 2005/0111903, US 2005/0228098 et 2007/0134408 divulguent une méthode de réparation à partir d'une pâte céramique comprenant un matériau céramique, un liant et un lubrifiant, déposée sur la surface à réparer puis chauffée jusqu'à 700 °C afin d'obtenir une réparation de type vitreux. Le matériau céramique est généralement constitué de particules solides de zircone avec des particules solides d'yttrine et le liant peut être à base de résine silicone. Les particules de céramique peuvent être nanométriques ce qui permet d'avoir un comportement thixotropique de la réparation lors de son application.

Une variante publiée dans US 2005/0118331 propose d'appliquer un mélange de particules solides de céramique, de sphères creuses en céramique avec un liant précurseur de silice puis de traiter thermiquement. Cependant, la céramique est injectée sous forme solide ce qui ne permet de combler ni les faibles interstices ni les fissures existantes à l'interface substrat/céramique. Par un tel procédé, la réparation obtenue n'a pas la morphologie microporeuse nécessaire pour résister aux fortes contraintes thermomécaniques subies par le composant, notamment l'aube. En effet, lors du séchage et du recuit, la couche appliquée a tendance à fritter ce qui entraîne la formation de fissures, de défauts d'adhérence et de desquamation. Ce procédé fait intervenir des poudres et des produits dangereux dont certains notamment le liant et le lubrifiant en se décomposant vont venir polluer la barrière thermique et modifier ses propriétés thermiques.

US 2010/0247740 décrit une technique de réparation de barrières thermiques basée sur le principe du dépôt dans la zone à réparer, d'un film céramique porteur humide d'un matériau de composition de la barrière thermique à réparer. Le film peut être constitué d'une ou plusieurs couches, et être préalablement infiltré par un dépôt humide réalisé par sol-gel ou par barbotine, en langue anglaise "slurry". Les températures à appliquer peuvent être comprises entre 400 et 2000 °C. Différents types de barrière thermique pouvant être réparés : zircone stabilisée ou partiellement stabilisée avec des oxydes de Ce, Hf, Y, Ca..., ceci ne permet pas d'effectuer simplement des réparations dans des zones de délaminage ou de très faible dimension puisque les films doivent être découpés aux dimensions des zones à réparer. De plus il est long et coûteux puisqu'il est nécessaire d'infiltrer le film céramique au préalable et la température de recuit doit être élevée.

Les techniques de réparation des barrières thermiques par voie sol-gel cf US 6235352, permettent une certaine infiltration dans les zones à réparer difficiles d'accès tout en conduisant cependant à des épaisseurs trop faibles. La réparation d'une barrière thermique typiquement d'épaisseur 100µm n'est pas envisageable avec ce type de technique de dépôt en couche mince car typiquement l'épaisseur d'une couche déposée par voie sol-gel est de 0,1µm. Le nombre de couches successives à déposer pour réparer une barrière thermique dans toute son épaisseur serait très coûteux en temps. Des particules d'oxyde solide ont été rajoutées, jusqu'à 90% en masse, dans les solutions sol-gel comme par exemple dans les publications US 5585136 et US 2004/0258611 de telle sorte que l'épaisseur d'une couche déposée soit plus élevée. Si l'épaisseur obtenue est alors compatible avec un procédé de réparation d'une couche épaisse de barrière thermique, les particules introduites sont solides et par conséquent le procédé présente les mêmes désavantages que ceux des procédés de projection. Un exemple est donné par L. Pin et alia dans « processing, repairing and cycling oxidation behaviour of sol-gel thermal barrier coating » Surface and Coating Technology 206 (2011) 1609-1614, qui divulgue que le procédé sol-gel chargé en poudres solides entraîne un remplissage non homogène des fissures.

A l'exception du procédé EB-PVD, sophistiqué et coûteux en réparation, les autres techniques de réparation de barrières thermiques utilisent soit l'injection de poudres solides ou fondues, soit une voie uniquement liquide notamment sol-gel, mais avec des rendements incompatibles avec l'utilisation.

La publication de Rousseau et al "Déposition of thick and 50% porous YpSZ layer by spraying nitrate solution in a low pressure plasma reactor", Surface and Coating Technology 206 (7) (2011) 1621-1627 propose d'élaborer sur de l'alumine une barrière thermique de zircone stabilisée à l'yttrine ou YpSZ (Yttria partially Stabilised Zirconia) d'épaisseur 200 µm à 50% de porosité avec une structure nanoporeuse et des microfissures verticales. Toutefois, cette technique ne permet pas de déposer les particules sous forme liquide ce qui rend impossible la réparation des fissures longitudinales à l'interface substrat/barrière thermique.

Après avoir mené cette importante revue qualitative des technologies, la Demanderesse s'est rendu compte qu'il était souhaitable de prendre en compte la réparation de la barrière thermique et de sa couche anti-CMAS tout en évitant les produits toxiques pour l'homme, en raison de la taille des poudres mises en oeuvre ou encore de leur nature chimique.

L'invention vise à remédier aux inconvénients des techniques ci-dessus, identifiés par la Demanderesse. Plus particulièrement, l'invention propose un procédé permettant de contrôler l'état des précurseurs de céramique injectés dans une décharge plasma basse pression et de ce fait de procéder à la réparation locale des barrières thermiques localement endommagées en infiltrant tout d'abord les fissures débouchantes et longitudinales de délaminage de la barrière thermique puis en colmatant les zones superficielles écaillées de plus grande taille. Une fissure longitudinale de délaminage peut se situer sous la barrière thermique, c'est-à-dire entre la barrière thermique et le substrat éventuellement revêtu d'une sous-couche métallique voire d'une couche d'oxyde. Une autre fissure longitudinale de délaminage peut se situer dans la barrière thermique elle-même.

Un procédé de réparation de barrière thermique de composant comportant un substrat revêtu d'une telle barrière thermique, ledit substrat étant réalisé en alliage à haute performance, ladite barrière thermique étant adhérente à l'alliage et de conductivité thermique inférieure à l'alliage, la barrière thermique comprenant au moins une céramique, une région de la barrière thermique étant à réparer, comprend les étapes suivantes :
a) Délimitation de la région à réparer, par un masque protégeant les autres régions de la barrière thermique;
b) Injection d'un gaz porteur chargé de gouttelettes de précurseur de céramique dans une décharge plasma au sein d'une chambre à plasma de réacteur à plasma logeant le composant à réparer tout en asservissant la concentration de précurseur de céramique dans le gaz porteur et au moins deux paramètres du réacteur parmi : pression de la chambre à plasma, puissance du générateur de plasma, diamètre de gouttelettes de précurseur, pour piloter l'état - liquide, gel ou solide - du précurseur de céramique impactant la région à réparer,
c) Injection du gaz non chargé de précurseur de céramique dans une décharge plasma au sein de la chambre à plasma,
les étapes b) et c) étant répétées.

Dans un mode de réalisation, ladite concentration est croissante à chaque itération de l'étape b) et lesdits aux moins deux paramètres sont décroissants à chaque itération de l'étape b) pour infiltrer des fissures de délaminage de la barrière thermique puis colmater des zones superficielles écaillées de ladite région.

Dans un mode de réalisation, le précurseur de céramique impactant le composant à réparer est à l'état liquide dans une première série d'étapes b), à l'état gel dans une deuxième série d'étapes b), à l'état solide dans une troisième série d'étapes b).

Dans un mode de réalisation, le procédé comprend une étape de nettoyage de ladite région effectuée dans la chambre à plasma préalablement à l'étape a), comprenant l'injection d'un gaz réducteur dans une décharge plasma.

Dans un mode de réalisation, le procédé comprend une étape de préparation de ladite région effectuée dans la chambre à plasma préalablement à l'étape a), comprenant l'injection d'un gaz oxydant dans une décharge plasma.

L'étape de nettoyage peut avoir lieu avant l'étape de préparation.

Dans un mode de réalisation, l'étape b) comprend des injections pulsées dudit gaz porteur, avec un rapport durée d'injection/durée de repos compris entre 1/5 et 1/30. Dans un mode de réalisation, les étapes b) et c) sont effectuées 6 à 30 fois.

Dans un mode de réalisation, le précurseur de céramique comprend au moins un parmi les nitrates ou oxynitrates de zirconium, les nitrates d'yttrium, les nitrates de gadolinium et les nitrates d'europium, de concentration comprise entre 0,05 et 0,5 mole par litre, de pH compris entre 1,2 et 2 et de conductivité électrique comprise entre 0,02 et 0,2 Siemens cm⁻¹.

Dans un mode de réalisation, le précurseur de céramique comprend au moins un parmi les acétates ou les chlorures.

Dans un mode de réalisation, la puissance du générateur qui délivre les ondes électromagnétiques pour créer le plasma est comprise entre 60 et 20000 W, préférablement entre 200 et 10000 W.

Dans un mode de réalisation, la pression dans la chambre à plasma est comprise entre 1 et 20000 Pa au cours des étapes b) et c), préférablement entre 100 et 10000 Pa.

Dans un mode de réalisation, l'injection est réalisée par un capillaire de diamètre compris entre 50 et 900 µm.

Dans un mode de réalisation, l'alliage comprend un superalliage base nickel. L'alliage peut être monocristallin pour une aube ou polycristallin pour une chambre de combustion.

Dans un mode de réalisation, l'alliage comprend un superalliage base cobalt. L'alliage peut être polycristallin.

Dans un mode de réalisation, l'épaisseur de la barrière thermique est comprise entre 50 et 300 µm, préférablement entre 100 et 150 µm.

Dans un mode de réalisation, la barrière thermique est perméable et contient des pores ouverts.

Dans un mode de réalisation, la barrière thermique est perméable et contient des pores fermés.

Dans un mode de réalisation, la barrière thermique comprend au moins un élément parmi la zircone, préférablement yttriée ou dopée à l'oxyde de néodyme, le zirconate de gadolinium, le zirconate de néodyme et le zirconate d'europium.

Dans un mode de réalisation, un plasma de basse puissance, par exemple 0,2 à 20 kW, en dépression, par exemple 10 à 10000 Pa, est créé dans un réacteur dans lequel une solution de précurseurs de céramiques, tels que des nitrates, des oxynitrates, des acétates, des chlorures ou tout autre organométallique liquide, est introduite par utilisation d'un injecteur, par exemple un spray, un jet, un nébuliseur, un atomiseur, permettant de produire des gouttelettes de diamètre comprise entre 100 nm et 2 mm.

Dans un mode de réalisation, un asservissement entre la concentration des précurseurs de céramique et au moins deux paramètres parmi la pression dans la chambre à plasma, la puissance du générateur de plasma et le système de production des gouttelettes est mis en oeuvre afin de piloter l'état -liquide, gel ou solide - des particules impactant le composant en vue de sa réparation là où la barrière thermique est endommagée. L'état - liquide, gel ou solide - des particules impactantes - à l'endroit et au moment de l'impact - est modifiable au cours du procédé. Pour une solution de précurseurs céramiques, ledit asservissement peut être effectué à partir d'une cellule de conductivité électrique, mesurant la conductivité électrique de la solution, d'un pHmètre, d'une sonde de mesure de la concentration de la solution de précurseurs de céramique comme une électrode sélective d'ions de nitrate ou encore d'un viscosimètre à capillaire. L'asservissement de la production des gouttelettes est fonction du type d'atomiseur utilisé. Il peut être effectué en faisant varier le diamètre du capillaire pour un atomiseur à pression de type liquide, ou la fréquence et la puissance du piézoélectrique pour un nébuliseur piézoélectrique. La pression dans la chambre à plasma peut être asservie par le groupe de pompage et la puissance du générateur de plasma asservie par le contrôleur du générateur. Un asservissement entre la concentration des précurseurs de céramique et au moins deux paramètres parmi la pression de la chambre à plasma, la puissance du générateur de plasma et le système de production des gouttelettes est suffisant pour piloter l'état liquide, gel ou solide des particules réparant la barrière thermique endommagée.

Dans un autre mode de réalisation, une optimisation plus fine et un rendement amélioré sont obtenus en asservissant la concentration des précurseurs de céramiques aux trois paramètres pression de la chambre à plasma, puissance du générateur de plasma et système de production des gouttelettes, notamment le diamètre.

Le composant à réparer peut être placé en décharge ou en post décharge plasma. En décharge, le porte substrat joue le rôle de contre électrode. En post décharge, le circuit est fermé par une contre électrode distincte du porte substrat, par exemple une tresse métallique mise à la masse. Le pilotage sera adapté en fonction de la différence de rendement induite.

Dans le cas de composants perforés, afin d'éviter le dépôt de céramique dans les trous ou canaux de refroidissement, le composant muni des trous peut être reliée à un fluide avec une pression supérieure à la pression dans la chambre à plasma, par exemple la pression atmosphérique, l'air externe occupant alors les canaux de refroidissement et bloquant le dépôt des précurseurs sur ces zones. On peut également prévoir un flux de fluide autre que de l'air au travers du composant perforé, par exemple au travers du pied de sapin creux dans le cas d'une aube refroidie.

On entend par précurseur de céramique un objet chimique contenant au moins un élément de la céramique et permettant d'amorcer une réaction de formation de ladite céramique.

L'invention permet de réaliser une réparation locale des barrières thermiques neuves ou usagées par un procédé de coût raisonnable, à faible consommation énergétique et permettant que soient envoyées à la surface du matériau à réparer des particules de réparation à l'état liquide, gel ou solide pilotable tout au long du procédé. De plus le procédé permet de réaliser au sein d'une même enceinte les étapes souhaitables pour la réparation locale des barrières thermiques, notamment des étapes préliminaires de décapage des oxydes ou produits de corrosion non protecteurs, de formation de la couche d'oxyde (TGO) dans les parties métalliques remises à nu afin d'assurer l'adhérence de la barrière thermique et le dépôt de la barrière thermique avec sa couche anti-CMAS. L'épaisseur de la réparation sur la zone endommagée peut être élevée, sensiblement égale à celle de la barrière thermique d'origine. Les produits mis en oeuvre sont satisfaisants pour la santé des opérateurs. La microstructure de la réparation obtenue est microporeuse et nanoporeuse avec une très faible conductivité thermique et donc compatible avec la microstructure obtenue par EB-PVD ou par projection plasma de la barrière thermique à réparer.

Le procédé permet de préserver une barrière thermique déposée sur composant perforé en évitant le colmatage des trous tels que les canaux de refroidissement d'une aube ou les trous d'une chambre de combustion multiperforée. Le procédé permet également de réparer dans la même enceinte la barrière thermique et sa couche anti-CMAS et ce par la mise en oeuvre d'étapes réalisées au sein de la même enceinte.

Le composant à réparer peut être perméable avec des pores ouverts, les pores ouverts pouvant être alimentés en un fluide de pression supérieure à la pression dans la chambre à plasma, ledit fluide occupant alors les pores ouverts, bloquant le dépôt des précurseurs dans les pores ouverts et laissant libre après réparation les pores ouverts.

En outre, on peut injecter avec les précurseurs de céramique, des suspensions, des alkoxydes métalliques, des solutions colloïdales ou des précurseurs de composés comprenant des ions à propriétés particulières, notamment optiques permettant ainsi d'obtenir des compositions particulières ou d'inclure dans la barrière thermique déposée à la profondeur désirée des capteurs thermiques dont l'usage est connu dans le domaine des diagnostics thermiques ou de contrôle non destructif.

D'autres caractéristiques et avantages de l'invention apparaîtront à l'examen de la description détaillée ci-après, et des dessins annexés, sur lesquels :
- la figure 1 est une vue en coupe d'un composant équipé d'une barrière thermique en bon état ;
- la figure 2 est une vue en coupe, agrandie par rapport à la figure 1, d'un composant dont la barrière thermique est endommagée ; et
- la figure 3 est une vue schématique d'un appareil de mise en oeuvre du procédé.
- La figure 4 est une vue en coupe d'un composant réparé ; et
- la figure 5 est une vue de détail de la figure 4.

La Demanderesse s'est aperçue qu'une technique provenant des piles à combustible était intéressante. Le lecteur est invité à se référencer à FR 2729400 décrivant un procédé de dépôt d'une couche mince d'oxyde métallique pour une pile à combustible. Un substrat est placé dans une chambre à vide communiquant avec une chambre à plasma présentant une tuyère convergente débouchant dans la chambre à vide par un orifice de sortie disposé face au substrat et de diamètre compris entre 2 et 5 mm. La pression dans la chambre à vide est comprise entre 10 et 2000 Pa. On injecte continuellement dans la chambre à plasma un faible débit d'un gaz comprenant au moins l'élément oxygène et on génère un plasma dans la chambre à plasma par excitation électromagnétique du gaz. On nébulise une solution aqueuse contenant au moins l'élément métallique, en générant ainsi un aérosol dans un gaz porteur qui présente une pression supérieure à la pression régnant dans la chambre à vide et on fait entrer séquentiellement, par aspiration, des quantités prédéterminées du gaz porteur chargé d'aérosol dans la chambre à plasma. A partir du réacteur de ce procédé comme base, la Demanderesse a mis au point un procédé de réparation de barrières thermiques localement endommagées.

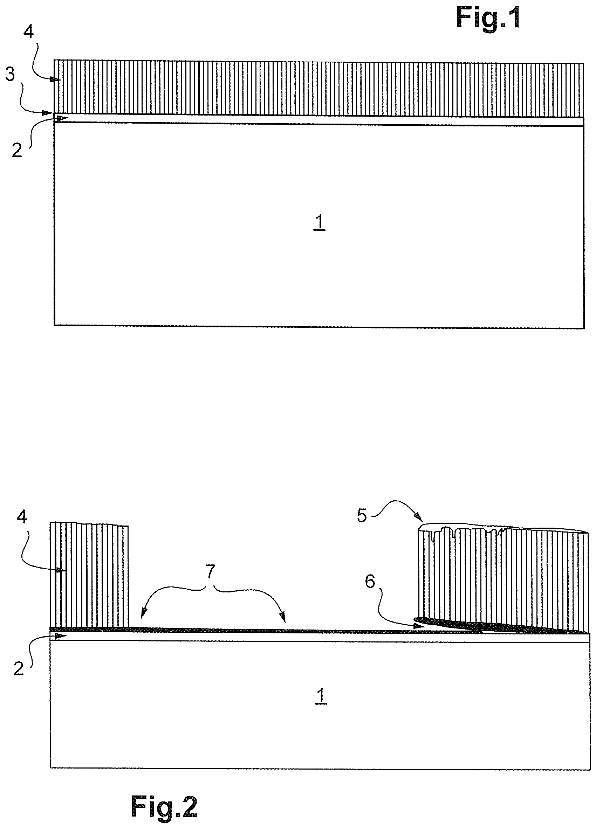

Comme illustré sur la figure 1, un composant comporte un substrat 1 réalisé en superalliage à base de nickel, revêtu sur sa face extérieure d'une sous-couche métallique 2 en alliage. La sous-couche métallique 2 peut comprendre essentiellement les éléments M, Cr, Al et Y avec M étant égal au fer, au cobalt et/ou au nickel. En variante, la sous-couche comprend de l'aluminiure de nickel simple, ou modifiée par un métal de la mine du platine, notamment Pt, Pd, Ru, Rh, Os, Ir et Re ou dopé par un élément réactif, par exemple Zr, Hf ou Y. La sous-couche métallique peut alternativement comprendre un dépôt de platine formé par diffusion. La sous-couche métallique 2 comprend une face extérieure revêtue d'une couche d'oxyde 3. La couche d'oxyde 3 présente une face extérieure revêtue par la barrière thermique 4.

La barrière thermique peut présenter une épaisseur comprise entre 100 et 150 µm. La barrière thermique 4 peut être élaborée par EB-PVD. La barrière thermique 4 peut comprendre un oxyde à base de zirconium partiellement stabilisée à l'yttrine. La couche d'oxyde 3 présente une épaisseur comprise entre 0,1 et 1 µm et préférablement entre 0,3 et 6 µm. La sous-couche 2 présente une épaisseur comprise entre 10 et 100 µm, préférablement entre 20 et 50 µm. La sous-couche 2 peut comprendre de l'aluminiure de nickel modifié platine ou dopé zirconium, cf US 7608301, ou un alliage γ-γ', cf. US 7273662 et peut elle-même comprendre une barrière de diffusion selon US 7482039. La sous-couche 2 repose sur le superalliage monocristallin à base de nickel 1. Alternativement, la couche d'oxyde 3 repose directement sur le super alliage comme indiqué dans US 5538796.

En fonctionnement, le composant peut subir des dégradations liées à des chocs thermiques, à l'écaillage de la couche externe, à l'oxydation de l'ensemble ou encore aux interactions avec l'environnement. On observe alors, voir figure 2, des dépôts de CMAS 5 en surface, des zones surfaciques 7 fortement écaillées dans lesquelles la sous-couche est oxydée ou corrodée, et encore des fissures longitudinales 6 de délaminage entre le superalliage et la barrière thermique, et au sein de la barrière thermique.

Typiquement, le composant présente des écaillages de quelques mm² à quelques cm² avec de nombreuses fissures longitudinales de délaminage entre la barrière thermique 4 et le substrat 1. La couche d'oxyde 3 présente une épaisseur comprise entre 0,3 et 6 µm La barrière thermique 4 présente ici une structure colonnaire.

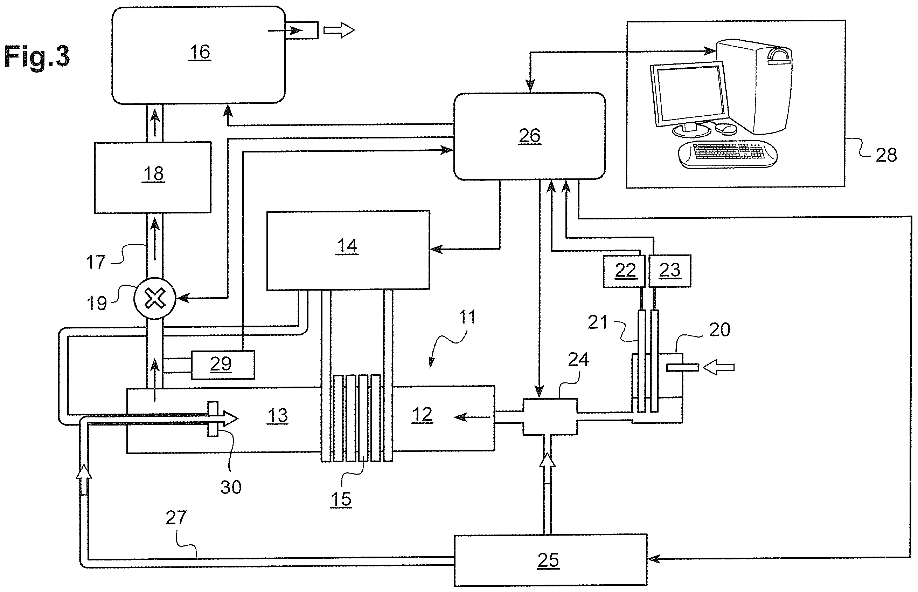

Comme on peut le voir sur la figure 3, le système comprend un réacteur 11 muni d'une chambre à plasma 12 dans laquelle est disposé un porte substrat 13. Le composant 30 peut être installé sur le porte substrat 13. Un générateur radio fréquence 14 alimente des spires inductives 15 disposées autour de la chambre à plasma 12. La masse électrique du générateur radio fréquence est reliée au porte substrat 13. Une pompe à vide 16 est reliée par une conduite 17 à l'intérieur de la chambre à plasma 12. Sur la conduite 17, sont prévus des filtres 18 permettant de capter les acides et les poussières et au moins une vanne commandée 19.

Au moins un récipient 20 est prévu pour contenir les précurseurs. Dans le récipient 20, sont disposées des sondes 21 d'un Phmètre 22 et d'un conductimètre 23. Le récipient 20 est relié à la chambre à plasma 12 par l'intermédiaire d'un dispositif d'introduction des gaz et d'injection des précurseurs 24 comportant une vanne. Le dispositif d'introduction 24 est également relié fluidiquement à un distributeur de gaz 25 muni au moins d'un débitmètre massique. Le dispositif d'introduction 24 comprend un capillaire de diamètre fixe ou réglable selon les besoins ou un nébuliseur éventuellement couplé à une vanne.

Un boîtier de commande, d'acquisition et de contrôle 26 est relié à des sorties du Phmètre 22 et du conductimètre 23 et au capteur de pression 29 en amont de la vanne de pompage 19. Le boîtier de commande 26 comprend des sorties de commande reliées à la pompe à vide 16, au générateur radio fréquence 14, au dispositif d'introduction 24 et au distributeur de gaz 25. Optionnellement est prévue une conduite 27 entre le distributeur de gaz 25 et le porte substrat 13 et une jauge de pression 31 en vue de fournir du gaz pour maintenir ouvert des perçages du composant à réparer. Le boîtier 26 est également en communication avec un ordinateur 28 équipé d'une carte d'acquisition et stocke les données de mise en oeuvre de l'asservissement, notamment les tableaux 1 à 3.

Après sablage du composant dirigé vers les régions à réparer et masquage des régions saines de la barrière thermique, le composant est installé dans un réacteur plasma basse pression sur un porte substrat.

La chambre à plasma du réacteur est mise en dépression. Le plasma est généré par décharge plasma dans une zone inter électrodes. Un plasma réducteur est alors créé afin d'opérer le nettoyage des régions à réparer. La couche d'oxyde promotrice d'adhésion est ensuite formée avec un plasma oxydant. Puis, en conservant le plasma oxydant, la pression de la chambre à plasma et la puissance du générateur de plasma sont augmentées et une solution d'oxynitrate hydraté de zirconium (IV) ZrO(NO₃)₂ 6H₂O et, éventuellement de nitrate d'yttrium Y(NO₃)₂, est pulvérisée par un capillaire. L'oxynitrate hydraté de zirconium (IV) et éventuellement le nitrate d'yttrium subissent une oxydation. Les nitrates arrivent sur le substrat à l'état liquide et s'infiltrent dans les fissures longitudinales de délaminage de la barrière thermique.

Puis on procède à une étape de post traitement avec maintien des gaz plasmagènes et de la décharge plasma allumée. Ainsi, l'oxynitrate hydraté de zirconium (IV) et, éventuellement le nitrate d'yttrium Y, déposés dans et sur le substrat sont encore soumis à oxydation.

Les cycles injection et post traitement sont répétés de 6 à 30 fois de façon à infiltrer les fissures longitudinales entre la barrière thermique endommagée et le substrat, et les fissures débouchantes qu'elles soient au sein de la barrière thermique ou qu'elles soient sous la barrière thermique et à recouvrir de larges zones surfaciques écaillées.

L'invention est illustrée en outre par les exemples suivants.

### Exemple 1.

La barrière thermique 4 est élaborée par EB-PVD et comprend un oxyde à base de zircone partiellement stabilisée YpSZ. L'épaisseur de la barrière thermique est comprise entre 100 et 150 µm. La barrière thermique repose sur une couche d'oxyde d'épaisseur 0,5 µm environ. La couche d'oxyde a été créée in situ lors du dépôt de la barrière thermique.

La sous-couche peut être de type aluminiure de nickel modifié platine ou dopé zirconium. L'épaisseur de la sous-couche est comprise entre 20 et 50 µm. La sous-couche repose sur le superalliage monocristallin à base de nickel.

Un sablage léger du composant, par exemple un sablage sec réalisé avec du corindon, est alors effectué afin d'écailler les zones recouvertes de CMAS, zones facilement éliminables en raison des fissures de délaminage créées par lesdits dépôts CMAS, et les zones de barrière thermique non adhérentes.

Le composant est ensuite placé dans un réacteur plasma basse pression et raccordé au porte substrat qui peut être refroidi ou chauffant, immobile ou tournant (selon la complexité du composant à traiter). Les parties saines du composant que l'on ne veut pas réparer sont protégées par un masque, par exemple une feuille d'aluminium.

Le plasma est généré, par exemple par des spires inductives dans lesquelles passe un courant radiofréquence. La fréquence du courant peut être de l'ordre de 40 MHz. Le générateur utilisé pour fournir ce courant peut être un générateur TOCCO-STEL transférant au gaz des puissances comprises entre 60 et 600W. Le générateur comprend deux parties, l'une pourvue d'un compartiment qui crée un courant continu haute tension à partir du courant triphasé du secteur, l'autre permettant de produire un courant haute fréquence. A cette fin, le générateur est équipé d'une triode et comprend un circuit oscillant à base de selfs et de capacités. Ce compartiment fournit un courant haute fréquence aux bornes du solénoïde qui comporte entre 5 et 6 spires. La décharge plasma peut être capacitive ou inductive.

Le démarrage du procédé comprend la mise en route du système de pompage afin de mettre la chambre à plasma du réacteur en dépression. La pression est contrôlée par une jauge par exemple de type MKSA. Le système de pompage permet de mettre le réacteur en dépression pour contrôler la décharge plasma à basse puissance. Le générateur est ensuite allumé afin d'initier la décharge plasma. Un plasma d'hydrogène ou d'argon-hydrogène ou d'ammoniac est alors créé afin d'opérer le nettoyage du composant dans les conditions suivantes : puissance : 200W, pression : 560 à 650 Pa, débit d'argon 1,8 litres par minute STP (dans les conditions Standard de Température et de Pression), débit d'azote 0,215 litre par minute STP, débit d'hydrogène 0,1 litre par minute STP, durée 25 minutes. La région à réparer étant alors débarrassée des impuretés et composés peu adhérents, la couche d'oxyde promotrice d'adhésion est formée. A cette fin, un plasma d'argon/azote/oxygène/vapeur d'eau est amorcé dans les conditions suivantes : puissance 260 W, pression 780 à 1000 Pa, débit d'argon 2,1 litres par minute STP, débit d'azote 0,275 litre par minute STP, débit d'oxygène 0,22 litre par minute STP, débit d'eau 0,0015 litre par minute STP par des injections pulsées de 2 minutes selon un cycle d'ouverture de vanne du dispositif d'introduction pendant 0,2 seconde et de fermeture de la vanne pendant 2 secondes, le tout pendant une durée de 90 minutes, recréant la couche d'oxyde dans les endroits où elle est absente.

Puis, en conservant le plasma d'argon/azote/oxygène dans les conditions précitées, la pression de la chambre à plasma est augmentée jusqu'à 5300 Pa, la puissance du générateur de plasma augmentée à 400W et une solution d'oxynitrate hydraté de zirconium (IV) et de nitrate d'yttrium (ZrO(NO₃)₂ 6H₂O et Y(NO₃)₂ de rapport molaire 8,5/1 est pulvérisée par un capillaire de diamètre 500 µm, avec un débit de 1,5 cm³ par minute, par des injections pulsées de 2 minutes suivant un cycle d'ouverture de vanne du dispositif d'introduction pendant 0,2 seconde et de fermeture de la vanne pendant 2 secondes dans la décharge plasma. La conductivité électrique et le pH de la solution injectée sont mesurés en continu.

Au cours de cette étape, l'oxynitrate hydraté de zirconium (IV) et le nitrate d'yttrium subissent l'action des espèces oxydantes O et OH aussi bien en vol que sur le substrat. Les conditions de pression dans la chambre à plasma et de puissance générée par le réacteur associées à la taille des gouttelettes produites par l'injecteur, font que les nitrates arrivent sur le substrat à l'état liquide et peuvent s'infiltrer dans les fissures longitudinales et dans les fissures de délaminage entre le substrat et la barrière thermique.

Puis on procède à une étape de post traitement d'une durée de l'ordre de 8 minutes consistant à maintenir les débits de gaz plasmagènes et la décharge plasma allumée. Ainsi, l'oxynitrate hydraté de zirconium (IV) et le nitrate d'yttrium qui se sont déposés dans et sur le substrat subissent encore la chimie oxydante de la décharge, principalement l'action des espèces O, puisque la solution n'est plus introduite pendant cette étape. En outre, on peut également alimenter le réacteur en eau de façon à produire des espèces OH pendant le post traitement. La température au niveau du porte substrat reste inférieure à 400 °C.

En tenant compte de la vitesse de dépôt qui s'avère comprise entre 15 et 25 µm/h, on répète 10 fois les cycles injection et post traitement de façon à infiltrer le plus possible les fissures longitudinales, notamment existant entre la barrière thermique endommagée et le substrat. Puis progressivement, grâce à l'asservissement mis en place entre le groupe de pompage, le générateur, l'injecteur, et la mesure du pH ou la valeur de conductivité électrique de la solution à injecter ou les deux, la pression dans la chambre à plasma est diminuée, la puissance du générateur de plasma diminuée, la taille des gouttelettes de précurseurs de céramique diminuée et la concentration de solution en nitrates augmentée. Ainsi, les gouttelettes de précurseur passent de l'état liquide à un état gel visqueux lors des cycles intermédiaires, puis solide permettant lors des derniers cycles injection/post traitement le recouvrement de larges zones surfaciques écaillées.

Les 10 premiers cycles d'injection/post traitement terminés, les paramètres de pression dans la chambre à plasma, de puissance de générateur de plasma, du système d'injection de la solution de précurseurs de céramique sont asservis, voir la figure 3, en fonction de la mesure de la conductivité électrique et de pH de la solution en nitrates. Les paramètres sont modifiés en début de chaque cycle d'injection selon le tableau 1 donné ci-dessous. Cet asservissement est réalisé en jouant sur une vanne de pompage, sur le contrôle du générateur et pour l'injecteur capillaire ici utilisé par le diamètre du capillaire.

**Tableau 1**

| N° du cycle injection/post-traitement (2min/8min) | Concentration de la solution en nitrates Mole/L | pH | σ : conductivité (S cm⁻¹) | Puissance (W) | Pression (Pa) Asservie en début de cycle | Diamètre du capillaire (µm) |
|---|---|---|---|---|---|---|
| 1-10 | 0,06 | 1,73 | 0,033 | 400 | 5300 | 500 |
| 11 | 0,09 | 1,68 | 0,039 | 380 | 5100 | 500 |
| 12 | 0,12 | 1,62 | 0,045 | 360 | 4900 | 500 |
| 13 | 0,15 | 1,57 | 0,057 | 340 | 4700 | 500 |
| 14 | 0,18 | 1,55 | 0,062 | 320 | 4500 | 200 |
| 15 | 0,21 | 1,5 | 0,073 | 300 | 4300 | 200 |
| 16 | 0,24 | 1,47 | 0,081 | 280 | 4100 | 200 |
| 17 | 0,27 | 1,45 | 0,088 | 260 | 3900 | 100 |
| 18 | 0,29 | 1,43 | 0,096 | 240 | 3700 | 100 |
| 19 | 0,32 | 1,42 | 0,103 | 220 | 3500 | 100 |
| 20 | 0,35 | 1,40 | 0,110 | 200 | 3000 | 100 |

La barrière thermique obtenue après les cycles d'injection/post traitement présente en sortie de réacteur une structure cristallisée visible au diffractogramme alors que la température dans la décharge plasma reste modérée.

La barrière thermique peut enfin, optionnellement, subir un recuit de température comprise entre 300 et 1400°C. Le recuit peut être effectué dans le réacteur, alors équipé d'un porte-substrat chauffant, ou à l'extérieur, sous air ou sous atmosphère contrôlée en gaz et en pression. Le recuit permet d'éliminer des traces superficielles résiduelles de nitrates et d'eau. Le recuit est également à l'origine d'un processus de germination-croissance des grains constitutifs de la couche.

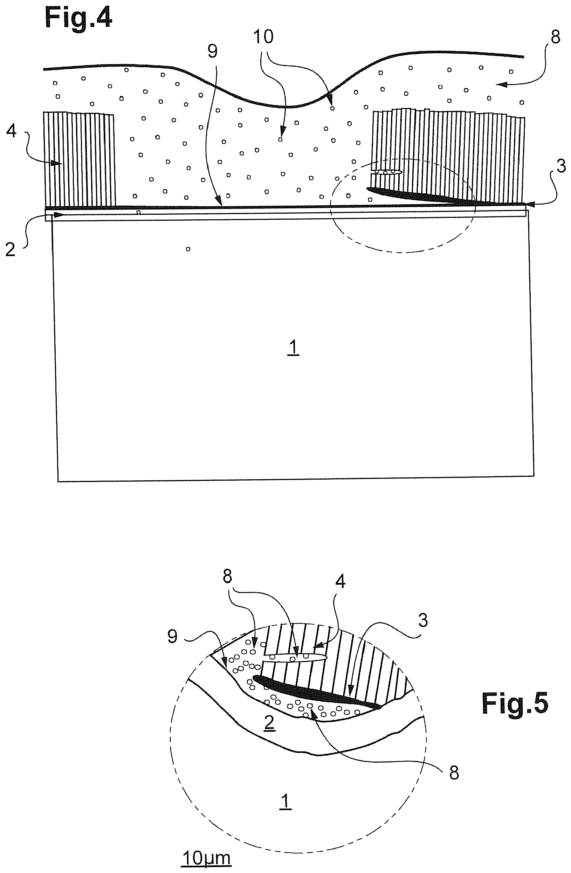

Le procédé permet d'obtenir, voir figures 4 et 5, une bonne réparation locale de la barrière thermique en recréant sur la sous-couche 2 une couche d'oxyde 9 aux endroits où la barrière thermique initiale 4 et la couche d'oxyde initiale 3 se sont décollées et en infiltrant une nouvelle couche de céramique 8 permettant ainsi le collage de la barrière thermique initiale 4. La nouvelle céramique déposée 8 comporte des micropores et des nanopores 10. La nouvelle couche de céramique 8 présente une très faible conductivité thermique et s'avère bien adhérente à la barrière thermique initiale 4 et au substrat 1. Les fissures longitudinales débouchantes initialement présentes dans la barrière thermique sont également colmatées. Un éventuel surplus de céramique 8 déposée sur le dessus de la barrière thermique initiale 4 peut être éliminé par sablage sec léger ou polissage. Pendant les étapes précitées, le composant à réparer peut être raccordé à une source de pression extérieure en surpression relative à la pression de la chambre à plasma. Ainsi un flux de gaz, par exemple d'air, vient de l'extérieur au travers du composant perforé et sort par les canaux de refroidissement venant ainsi empêcher le dépôt des précurseurs dans les trous. Un gaz autre que l'air peut également être utilisé. On évite ainsi une opération de reperçage des trous à la fois onéreuse et relativement risquée pour l'intégrité du composant.

### Exemple 2

On opère comme dans l'exemple 1 sauf qu'il n'y a pas d'asservissement sur le système d'injection des gouttelettes de précurseurs de céramique. Le diamètre des capillaires reste fixé à 500 µm. L'asservissement est donné dans le tableau 2.

**Tableau 2**

| N° du cycle injection/post-traitement (2min/8min) | Concentration de la solution en nitrates Mole/L | pH | σ : conductivité (S cm⁻¹) | Puissance (W) | Pression (Pa) Asservie en début de cycle | Diamètre du capillaire (µm) |
|---|---|---|---|---|---|---|
| 1-10 | 0,06 | 1,73 | 0,033 | 400 | 5300 | 500 |
| 11 | 0,09 | 1,68 | 0,039 | 380 | 5100 | 500 |
| 12 | 0,12 | 1,62 | 0,045 | 360 | 4900 | 500 |
| 13 | 0,15 | 1,57 | 0,057 | 340 | 4700 | 500 |
| 14 | 0,18 | 1,55 | 0,062 | 320 | 4500 | 500 |
| 15 | 0,21 | 1,5 | 0,073 | 300 | 4300 | 500 |
| 16 | 0,24 | 1,47 | 0,081 | 280 | 4100 | 500 |
| 17 | 0,27 | 1,45 | 0,088 | 260 | 3900 | 500 |
| 18 | 0,29 | 1,43 | 0,096 | 240 | 3700 | 500 |
| 19 | 0,32 | 1,42 | 0,103 | 220 | 3500 | 500 |
| 20 | 0,35 | 1,40 | 0,110 | 200 | 3000 | 500 |

On obtient au niveau de la zone réparée des résultats très semblables à ceux obtenus dans l'exemple 1, à savoir une bonne infiltration de la céramique déposée et une bonne adhérence entre la barrière thermique initiale 4 et la céramique déposée nouvellement 8. L'épaisseur totale de la céramique 8 déposée est légèrement plus faible.

Avec un asservissement sur deux paramètres, pression dans la chambre à plasma et puissance du générateur de plasma, au lieu de trois, pression dans la chambre à plasma, puissance du générateur de plasma et système d'injection, le réglage est moins fin et les derniers cycles dans lesquels un bon rendement est obtenu avec un état solide des précurseurs de céramiques sont moins optimisés.

### Exemple 3

On opère comme dans l'exemple 1 sauf que le composant est recouvert d'une barrière thermique projetée plasma comme par exemple une chambre de combustion multiperforée. Classiquement, une telle chambre de combustion présente de larges zones écaillées de plusieurs cm² de surface avec des fissures de délaminage. Le composant à réparer peut être raccordé à la pression extérieure, ou en dépression ou en surpression par rapport à la pression extérieure tout en étant en surpression par rapport à la pression de la chambre à plasma.

On obtient au niveau de la zone réparée, des résultats très semblables à ceux obtenus dans l'exemple 1, notamment une bonne infiltration de la céramique déposée 8 et une bonne adhérence entre la barrière thermique initiale 4 et la céramique nouvellement déposée 8. Après réparation, les trous de multi perforations de la chambre de combustion restent ouverts et on peut se passer d'opération de reperçage.

Pour cet exemple, le tableau d'asservissement de la composition de la solution à injecter, de la pression dans la chambre à plasma, de la puissance du générateur de plasma et du système d'injection est le suivant :

**Tableau 3**

| N° du cycle injection/post-traitement (2min/8min) | Concentration de la solution en nitrates Mole/L | pH | σ : conductivité (S cm⁻¹) | Puissance (W) | Pression (Pa) Asservie en début de cycle | Diamètre du capillaire (µm) |
|---|---|---|---|---|---|---|
| 1-10 | 0,06 | 1,73 | 0,033 | 400 | 5300 | 500 |
| 11 | 0,09 | 1,68 | 0,039 | 380 | 4800 | 500 |
| 12 | 0,12 | 1,62 | 0,045 | 360 | 4300 | 500 |
| 13 | 0,15 | 1,57 | 0,057 | 340 | 3800 | 500 |
| 14 | 0,18 | 1,55 | 0,062 | 320 | 3300 | 200 |
| 15 | 0,21 | 1,5 | 0,073 | 300 | 2800 | 200 |
| 16 | 0,24 | 1,47 | 0,081 | 280 | 2300 | 200 |
| 17 | 0,27 | 1,45 | 0,088 | 260 | 1800 | 100 |
| 18 | 0,29 | 1,43 | 0,096 | 240 | 1300 | 100 |
| 19 | 0,32 | 1,42 | 0,103 | 220 | 1000 | 100 |
| 20 | 0,35 | 1,40 | 0,110 | 200 | 700 | 100 |

### Exemple 4

On opère comme dans l'exemple 1 ou 3 mais on ajoute après les séquences d'injection/post traitement d'une solution d'oxynitrate hydraté de zirconium (IV) et de nitrate d'yttrium permettant de réparer la barrière thermique, des séquences d'injection de précurseurs de céramique de composition dites anti-CMAS comme le zirconate de gadolinium Gd₂Zr₂O₇ ou le zirconate de néodyme ou une zircone dopée à l'oxyde de néodyme afin de créer une couche anti-CMAS.

Les précurseurs sont par exemple ZrO(NO₃)₂,6H₂O et Gd(NO₃)₃,6H₂O pour former du zirconate de gadolinium. On obtient des résultats sensiblement identiques à ceux de l'exemple 1, à savoir une bonne réparation bien infiltrée et en surface une céramique de Gd₂Zr₂O₇ microporeuse et nano poreuse tout en étant bien adhérente.

### Exemple 5

On opère comme dans les exemples 1 ou 3 mais on remplace les séquences d'injection/post traitement d'une solution d'oxynitrate hydraté de zirconium (IV) et de nitrate d'yttrium par des séquences d'injection/post-traitements de précurseurs de barrière thermiques autres. On peut ainsi injecter des précurseurs de céramique de composition dites anti-CMAS comme ZrO(NO₃)₂,6H₂O et Gd(NO₃)₃,6H₂O précurseurs de Gd₂Zr₂O₇ ou des précurseurs de zircone dopée à l'oxyde de néodyme. La réparation locale de la barrière thermique initiale est alors réalisée avec une céramique de composition anti-CMAS comportant des micropores et des nanopores. Cette composition anti-CMAS offre une très faible conductivité thermique et est donc bien adaptée à la réparation de barrière thermique. La composition anti-CMAS est bien adhérente au substrat et à la barrière thermique initiale 4 constituée de zircone partiellement stabilisée à l'yttrine.

### Exemple 6

On opère comme dans les exemples 1 ou 3 mais en injectant une solution à composition évolutive lors des cycles d'injection/post-traitement. Par exemple, lors des dix premiers cycles on injecte une solution de (ZrO(NO₃)₂,6H₂O et Y(NO₃)₂) précurseurs de la zircone yttriée. Progressivement on ajuste la concentration de ces précurseurs pour ajouter du Gd(NO₃)₃,6H₂O précurseur du zirconate de gadolinium Gd₂Zr₂O₇, tout en respectant une concentration totale compatible avec l'asservissement. Lors des derniers cycles d'injection/post traitement, la concentration de nitrate d'yttrium est progressivement ramenée à zéro, les deux autres précurseurs subsistants.

Est obtenue une bonne réparation de la barrière thermique 4 endommagée avec une céramique présentant un gradient de composition : de la composition Zr₂O₃, Y₂O₃ à proximité du substrat 1 en superalliage à base de nickel, à la composition Gd₂Zr₂O₇ en surface extérieure. La structure microporeuse et nanoporeuse de la céramique déposée 8 n'est guère influencée par la composition, ni par le gradient de composition.

### Exemple 7

On opère comme dans les exemples 1 ou 3 mais en injectant une solution de précurseurs céramiques de composition particulière lors des dix premiers cycles d'injection/post-traitement. Ladite solution de précurseurs de céramiques a pour but d'introduire, par exemple, des composés possédant des propriétés particulières à l'interface couche d'oxyde 9 et barrière thermique déposée 8. Il peut s'agir par exemple d'une solution de Eu(NO₃)₃,6H₂O et ZrO(NO₃)₂,6H₂O précurseurs du zirconate d'europium Eu₂Zr₂O₇ ou de zircone yttriée dopée à l'europium ou d'une solution de Eu(NO₃)₃,6H₂O, ZrO(NO₃)₂,6H₂O et Gd(NO₃)₃,6H₂O précurseurs du zirconate de gadolinium dopé à l'europium. Ces composés possédant des ions à propriété optique particulière, peuvent être utilisés pour vérifier l'état de contrainte de la zone réparée dans le cadre d'un contrôle non destructif. On obtient ainsi, outre une bonne réparation de la barrière endommagée avec une céramique, une facilité de contrôle grâce aux capteurs proches du substrat 1 du composant. La structure microporeuse et nanoporeuse de la céramique déposée n'est guère influencée par la composition de cette couche particulière.

Selon les besoins, cette solution particulière de précurseurs de céramique peut être injectée lors d'autres cycles d'injection/post-traitement que les dix premiers. Il peut également s'agir de précurseurs de céramiques mélangés à des suspensions, colloïdes ou alkoxydes métalliques afin d'obtenir localement des propriétés spécifiques.

### Exemple 8

On opère comme dans les exemples précédents mais avec un autre dispositif de création du plasma qui comprend un dispositif de génération et de transport de l'énergie micro-onde et un dispositif de couplage avec l'écoulement, par exemple un atomiseur.

L'énergie micro-onde créée par deux générateurs micro-onde en mode pulsé à 2,45 GHz, de type SAIREM GMP 20 KE/D de puissance ajustable de 200 à 10000 W chacun stabilisée à ± 0.1%, placés face à face. L'énergie micro-onde est injectée suivant un diamètre du tube en quartz par deux guides d'onde. Le dispositif comprend également deux adaptateurs d'impédance, des interfaces pour pilotage par ordinateur et des mesureurs de puissance réfléchie.

Le couplage avec le gaz réalisé dans un excitateur cylindrique en acier inox refroidi par circulation d'eau dans une double enveloppe et placé autour d'un tube en quartz à embase dans lequel est créé le plasma et refroidi par exemple à l'air. Il est prévu des brides raccordées au sous ensemble permettant l'injection des précurseurs et au dispositif de chauffage du substrat. Le porte substrat peut être refroidi ou chauffant et utilisé en configuration statique ou tournante.

La pression de travail dans la chambre à plasma est de 1 à 20000 Pa, avec un débit maximal des gaz d'environ 12 litres par minute STP, dont 5 litres par minute d'oxygène STPet 7 litres par minute STP d'argon.

Avec l'asservissement entre la concentration de la solution de précurseurs de céramique à injecter, la pression dans la chambre à plasma, la puissance des générateurs micro-onde et le système d'injection, on obtient des résultats satisfaisants.

## Revendications

1. Procédé de réparation de barrière thermique de composant comportant un substrat revêtu d'une telle barrière thermique, ledit substrat étant réalisé en alliage à haute performance, ladite barrière thermique étant adhérente à l'alliage et de conductivité thermique inférieure à l'alliage, la barrière thermique comprenant au moins une céramique, une région de la barrière thermique étant à réparer, comprenant les étapes suivantes :
a) Délimitation de la région à réparer, par un masque protégeant les autres régions de la barrière thermique;
b) Injection d'un gaz porteur chargé de gouttelettes de précurseur de céramique dans une décharge plasma au sein d'une chambre à plasma de réacteur à plasma logeant le composant à réparer tout en asservissant la concentration de précurseur de céramique dans le gaz porteur et au moins deux paramètres du réacteur parmi : pression de la chambre de plasma, puissance du générateur de plasma, diamètre de gouttelettes de précurseur, pour piloter l'état - liquide, gel ou solide - du précurseur de céramique impactant la région à réparer,
c) Injection d'un gaz non chargé de précurseur de céramique dans une décharge plasma au sein de la chambre à plasma,
les étapes b) et c) étant répétées.

2. Procédé selon la revendication 1, dans lequel ladite concentration est croissante à chaque itération de l'étape b) et lesdits au moins deux paramètres sont décroissants à chaque itération de l'étape b) pour infiltrer des fissures de délaminage de la barrière thermique puis colmater des zones superficielles écaillées de ladite région.

3. Procédé selon la revendication 1 ou 2, comprenant une étape de nettoyage de ladite région effectuée dans la chambre à plasma préalablement à l'étape a), comprenant l'injection d'un gaz réducteur dans une décharge plasma.

4. Procédé selon l'une des revendications précédentes, comprenant une étape de préparation de ladite région effectuée dans la chambre à plasma préalablement à l'étape a), comprenant l'injection d'un gaz oxydant dans une décharge plasma.

5. Procédé selon les revendications 3 et 4, dans lequel l'étape de nettoyage a lieu avant l'étape de préparation.

6. Procédé selon l'une des revendications précédentes, dans lequel l'étape b) comprend des injections pulsées dudit gaz porteur, avec un rapport durée d'injection/durée de repos compris entre 1/5 et 1/30.

7. Procédé selon l'une des revendications précédentes, dans lequel les étapes b) et c) sont effectuées 6 à 30 fois.

8. Procédé selon l'une des revendications précédentes, dans lequel le précurseur de céramique comprend au moins un parmi l'oxynitrate hydraté de zirconium (IV), les nitrates d'yttrium, les nitrates de gadolinium et les nitrates d'europium, de concentration comprise entre 0,05 et 0,5 mole par litre, de pH compris entre 1,2 et 2 et de conductivité électrique comprise entre 0,02 et 0,2 Siemens cm⁻¹.

9. Procédé selon l'une des revendications précédentes, dans lequel la puissance de la décharge plasma est comprise entre 60 et 20000 W, préférablement entre 200 et 10000 W.

10. Procédé selon l'une des revendications précédentes, dans lequel la pression dans la chambre à plasma du réacteur à plasma est comprise entre 1 et 20000 Pa au cours des étapes b) et c), préférablement entre 100 et 10000 Pa.

11. Procédé selon l'une des revendications précédentes, dans lequel l'injection est réalisée par un capillaire de diamètre compris entre 50 et 900 µm

12. Procédé selon l'une des revendications précédentes, dans lequel l'alliage comprend un superalliage à base choisie parmi au moins un de nickel et cobalt.

13. Procédé selon l'une des revendications précédentes, dans lequel l'épaisseur de la barrière thermique est comprise entre 50 et 300 µm, préférablement entre 100 et 150 µm.

14. Procédé selon l'une des revendications précédentes, dans lequel la barrière thermique est perméable.

15. Procédé selon l'une des revendications précédentes, dans lequel le composant à réparer est perméable avec des pores ouverts, les pores ouverts étant alimentés en un fluide de pression supérieure à la pression dans la chambre à plasma, ledit fluide occupant alors les pores ouverts, bloquant le dépôt des précurseurs dans les pores ouverts et laissant libre après réparation les pores ouverts.

16. Procédé selon l'une des revendications précédentes, dans lequel la barrière thermique comprend au moins un parmi la zircone, préférablement yttriée ou dopée à l'oxyde de néodyme, le zirconate de gadolinium, le zirconate de néodyme et le zirconate d'europium.

## Patentansprüche

1. Verfahren zur Reparatur einer Wärmesperre eines Bauteils, das ein mit einer solchen Wärmesperre beschichtetes Substrat aufweist, wobei das Substrat als Hochleistungslegierung ausgeführt ist, wobei die Wärmesperre an der Legierung anhaftet und eine geringere Wärmeleitfähigkeit hat als die Legierung, wobei die Wärmesperre mindestens eine Keramik aufweist, wobei ein Bereich der Wärmesperre zu reparieren ist, die folgenden Schritte aufweisend:
a) Eingrenzen des zu reparierenden Bereichs durch eine die anderen Bereiche der Wärmesperre schützende Maske;
b) Einbringen eines mit Tröpfchen eines Keramikvorläufers beladenen Trägergases in einer Plasmaentladung im Inneren einer Plasmakammer eines Plasmareaktors, die das zu reparierende Bauteil aufnimmt, indem dabei die Konzentration des Keramikvorläufers im Trägergas und mindestens zwei Parameter des Reaktors geregelt werden, darunter: der Druck der Plasmakammer, die Leistung des Plasma-Generators, der Durchmesser der Vorläufertröpfchen, um den Zustand - flüssig, gelartig oder fest - des auf den zu reparierenden Bereich auftreffenden Keramikvorläufers zu steuern,
c) Einbringen eines nicht mit einem Keramikvorläufer beladenen Gases in eine Plasmaentladung im Inneren der Plasmakammer,
wobei die Schritte b) und c) wiederholt werden.

2. Verfahren nach Anspruch 1, wobei die Konzentration bei jeder Wiederholung des Schritts b) zunimmt und die mindestens zwei Parameter bei jeder Wiederholung des Schritts b) abnehmen, um Schichtablösungsrisse der Wärmesperre zu infiltrieren und dann die abgeschuppten Oberflächenzonen des Bereichs zu verstopfen.

3. Verfahren nach Anspruch 1 oder 2, einen Schritt der Reinigung des Bereichs umfassend, der in der Plasmakammer vor dem Schritt a) erfolgt, das Einbringen eines Reduktionsgases in eine Plasmaentladung umfassend.

4. Verfahren nach einem der vorhergehenden Ansprüche, einen Schritt des Vorbereitens des Bereichs umfassend, der in der Plasmakammer vor dem Schritt a) erfolgt, das Einbringen eines oxidierenden Gases in eine Plasmaentladung umfassend.

5. Verfahren nach den Ansprüchen 3 und 4, wobei der Reinigungsschritt vor dem Vorbereitungsschritt stattfindet.

6. Verfahren nach einem der vorhergehenden Ansprüche, wobei der Schritt b) gepulste Einspritzungen des Trägergases bei einem Verhältnis Einspritzdauer/Ruhedauer umfasst, das zwischen 1/5 und 1/30 beträgt.

7. Verfahren nach einem der vorhergehenden Ansprüche, wobei die Schritte b) und c) 6 bis 30 Mal erfolgen.

8. Verfahren nach einem der vorhergehenden Ansprüche, wobei der Keramikvorläufer mindestens hydratisiertes Zirkonium(IV)-Oxynitrat, Yttriumnitrate, Gadoliniumnitrate und/oder Europiumnitrate umfasst, mit einer Konzentration, die zwischen 0,05 und 0,5 Mol pro Liter beträgt, einem pH, der zwischen 1,2 und 2 liegt, und einer elektrischen Leitfähigkeit, die zwischen 0,02 und 0,2 Siemens cm⁻¹ beträgt.

9. Verfahren nach einem der vorhergehenden Ansprüche, wobei die Leistung der Plasmaentladung zwischen 60 und 20000 W, vorzugsweise zwischen 200 und 10000 W beträgt.

10. Verfahren nach einem der vorhergehenden Ansprüche, wobei der Druck in der Plasmakammer des Plasmareaktors während der Schritte b) und c) zwischen 1 und 20000 Pa, vorzugsweise zwischen 100 und 10000 Pa beträgt.

11. Verfahren nach einem der vorhergehenden Ansprüche, wobei das Einbringen durch eine Kapillare mit einem Durchmesser erfolgt, der zwischen 50 und 900 µm beträgt.

12. Verfahren nach einem der vorhergehenden Ansprüche, wobei die Legierung eine Superlegierung auf einer aus Nickel und/oder Cobalt ausgewählten Basis umfasst.

13. Verfahren nach einem der vorhergehenden Ansprüche, wobei die Dicke der Wärmesperre zwischen 50 und 300 µm, vorzugsweise zwischen 100 und 150 µm beträgt.

14. Verfahren nach einem der vorhergehenden Ansprüche, wobei die Wärmesperre durchlässig ist.

15. Verfahren nach einem der vorhergehenden Ansprüche, wobei das zu reparierende Bauteil durchlässig, mit offenen Poren ist, wobei den offenen Poren ein Fluid mit einem Druck zugeführt wird, der höher ist als der Druck in der Plasmakammer, wobei das Fluid dann die offenen Poren besetzt, wodurch das Absetzen der Vorläufer in den offenen Poren blockiert wird und die offenen Poren nach der Reparatur freigelassen sind.

16. Verfahren nach einem der vorhergehenden Ansprüche, wobei die Wärmesperre Zirkon, vorzugsweise mit Yttrium versetzt oder mit Neodymoxid dotiert, Gadoliniumzirconat, Neodymzirconat und/oder Europiumzirkonat umfasst.

## Claims

1. A method for repairing the thermal barrier of a component comprising a substrate coated with such a thermal barrier, said substrate being made of high-performance alloy, said thermal barrier adhering to the alloy and being of lower thermal conductivity than the alloy, the thermal barrier comprising at least one ceramic, it being necessary to repair a region of the thermal barrier, comprising the following steps:
a) delimiting the region to be repaired, with a mask protecting the other regions of the thermal barrier;
b) injecting a carrier gas loaded with droplets of ceramic precursor into a plasma discharge within a plasma chamber of a plasma reactor containing the component to be repaired while controlling the concentration of ceramic precursor in the carrier gas and at least two parameters of the reactor among: pressure of the plasma chamber, power of the plasma generator, diameter of precursor droplets, to control the state - liquid, gel or solid - of the ceramic precursor impacting the region to be repaired,
c) injecting a gas not loaded with ceramic precursor into a plasma discharge within the plasma chamber,
steps b) and c) being repeated.

2. The method as claimed in claim 1, in which said concentration increases at each iteration of step b) and said at least two parameters decrease at each iteration of step b) to infiltrate delamination cracks of the thermal barrier and then fill the spalled surface zones of said region.

3. The method as claimed in claim 1 or 2, comprising a step of cleaning said region, carried out in the plasma chamber prior to step a), comprising injection of a reducing gas into a plasma discharge.

4. The method as claimed in one of the preceding claims, comprising a step of preparing said region, carried out in the plasma chamber prior to step a), comprising injection of an oxidizing gas into a plasma discharge.

5. The method as claimed in claims 3 and 4, in which the cleaning step takes place before the preparation step.

6. The method as claimed in one of the preceding claims, in which step b) comprises pulsed injections of said carrier gas, with a ratio of injection time to resting time between 1/5 and 1/30.

7. The method as claimed in one of the preceding claims, in which steps b) and c) are carried out 6 to 30 times.

8. The method as claimed in one of the preceding claims, in which the ceramic precursor comprises at least one among hydrated zirconium (IV) oxynitrate, yttrium nitrates, gadolinium nitrates and europium nitrates, with a concentration between 0.05 and 0.5 mole per liter, with pH between 1.2 and 2 and with electrical conductivity between 0.02 and 0.2 Siemens cm⁻¹.

9. The method as claimed in one of the preceding claims, in which the power of the plasma discharge is between 60 and 20000 W, preferably between 200 and 10000 W.

10. The method as claimed in one of the preceding claims, in which the pressure in the plasma chamber of the plasma reactor is between 1 and 20000 Pa during steps b) and c), preferably between 100 and 10000 Pa.

11. The method as claimed in one of the preceding claims, in which injection is carried out via a capillary with a diameter between 50 and 900 µm.

12. The method as claimed in one of the preceding claims, in which the alloy comprises a superalloy with a base selected from at least one of nickel and cobalt.

13. The method as claimed in one of the preceding claims, in which the thickness of the thermal barrier is between 50 and 300 µm, preferably between 100 and 150 µm.

14. The method as claimed in one of the preceding claims, in which the thermal barrier is permeable.

15. The method as claimed in one of the preceding claims, in which the component to be repaired is permeable with open pores, the open pores being supplied with a fluid with a pressure above the pressure in the plasma chamber, said fluid then occupying the open pores, blocking deposition of the precursors in the open pores and leaving the open pores free after repair.

16. The method as claimed in one of the preceding claims, in which the thermal barrier comprises at least one among zirconia, preferably yttria-stabilized or doped with neodymium oxide, gadolinium zirconate, neodymium zirconate and europium zirconate.
